Europäisches Patentamt

European Patent Office

Office européen des brevets

(11) Publication number: **0 420 070 A1**

## EUROPEAN PATENT APPLICATION

(21) Application number: **90118220.4**

(22) Date of filing: **21.09.90**

(51) Int. Cl.5: **G01P 21/00**

(30) Priority: **21.09.89 JP 245843/89**

(43) Date of publication of application:
**03.04.91 Bulletin 91/14**

(84) Designated Contracting States:
**DE FR GB SE**

(71) Applicant: **SUMITOMO ELECTRIC INDUSTRIES, LTD.**
**5-33, Kitahama 4-chome, Chuo-ku**
**Osaka-shi, Osaka 541(JP)**

(72) Inventor: **Tanaka, Hirohisa, c/o Itami Works**
**Sumitomo Electric Ind. Ltd,, 1-1, Koyakita**
**1-chome**
**Itami-shi, Hyogo(JP)**

(74) Representative: **Glawe, Delfs, Moll & Partner**
**Patentanwälte**
**Postfach 26 01 62**
**W-8000 München 26(DE)**

(54) Malfunction detector for acceleration sensor.

(57) A malfunction detector for acceleration sensors for use in an antilock control system (10) having a processing/lock state detector (12) for detecting whether vehicle wheels are showing a tendency to lock or a tendency to recover from locking state and for outputting brake pressure control commands such as pressure reduction and pressure increase commands, and a plurality of acceleration sensors (15, 15') for outputting detection signals to the processing/lock state detector (12). The malfunction detector has a testing unit (19) for testing the acceleration sensors (15, 15'), a changeover unit (17) for selectively supplying the output signals from the acceleration sensors (15, 15') to the processing/lock state detector (12) or to the testing unit (19), and a warning lamp (WL) connected to the testing unit (19). Upon receipt of such output signals, the testing device checks if the acceleration sensors are working normally by moving their position. The results of such checkings are indicated by the warning lamp (WL).

FIG.1

## MALFUNCTION DETECTOR FOR ACCELERATION SENSOR

This invention relates to a malfunction detector for an acceleration sensor provided in an antilock control system of a vehicle.

The deceleration of a vehicle while its wheels are locking represents the frictional coefficient of the road surface (hereinafter referred to as $\mu$), provided the road surface is uniform. Thus, by providing an antilock control system with an acceleration sensor, it becomes possible to judge whether the vehicle is travelling on a road surface having a high-$\mu$ value or one having a low-$\mu$ value. This makes it possible to change over the mode of control in such a way as to increase the locking detecting sensitivity or to increase the sensitivity for detecting the recovery from locking state while the vehicle is on a low-$\mu$ road, thus reducing the brake pressure to a greater degree, and to lower such detecting sensitivity while on a high-$\mu$ road, thus reducing the brake pressure to a lesser degree.

Besides the above method, various proposals have been made to change the processing level of antilock control, depending upon the ON and OFF positions of an acceleration sensor. For example, it was proposed to re-increase the pressure after pressure reduction while on a high-$\mu$ road and slowly while on a low-$\mu$ road or to control the rate of change of the estimated vehicle speed.

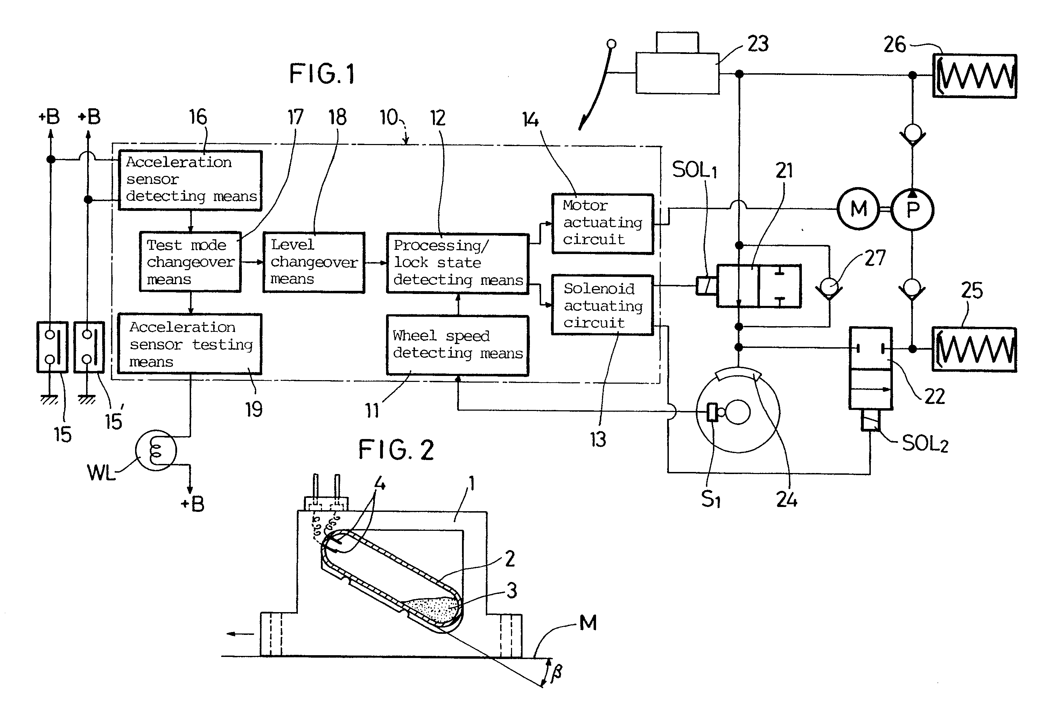

Such acceleration sensors come in various structures. Fig. 2 shows one example, which comprises a switch body 1 and a glass tube 2 fixedly mounted in the switch body 1 at an angle of $\beta$ with respect to the mounting surface M. If a deceleration larger than tan $\beta$ acts while the vehicle is moving in the direction of arrow, i.e. parallel to the mounting surface, mercury 3 in the glass tube 2 moves toward electrodes 4, electrically connecting them together. While the electrodes 4 are electrically connected, a deceleration larger than a predetermined level is acting. If not, there is no such deceleration.

In contrast, electrodes may be provided at the lower end of the glass tube 2 so that an electrical connection will be cut off while a deceleration larger than a predetermined level is acting. Another type of acceleration sensor has rolling elements adapted to roll when subjected to deceleration to actuate a limit switch.

If such acceleration sensors should fail, it becomes impossible to change the control level of the anti lock control system. This will pose such a problem as increase in the braking distance.

To prevent this, it was proposed to provide a plurality of acceleration sensors and carry out control for a high-$\mu$ road if one of the acceleration sensors indicates a high deceleration or only if all the acceleration sensors show a high deceleration.

But with the former method, if the mass in one of the acceleration sensors should get stuck at the high deceleration side, the anti lock control performance on a low-$\mu$ road will drop because the control mode is fixed to one for a high-$\mu$ road.

With the latter method, if the mass in any one of the sensors should get stuck at the low deceleration side, the braking distance tends to increase while on a high-$\mu$ road, because the control mode is fixed to one for a low-$\mu$ road.

Further, even if there is no mass getting stuck, if the sensitivity of the acceleration sensors should shift for some reason, the same problems as described above will result.

It is an object of the present invention to provide a device which can easily detect any malfunctions of an acceleration sensor.

In accordance with the present invention, there is provided a malfunction detector for acceleration sensors which comprises a testing means for testing the acceleration sensors, a changeover means for selectively supplying the output signals from the acceleration sensors to the processing/lock state detecting means or to the testing means, and warning means connected to the testing means. The testing means is adapted, upon receipt of the output signals from the acceleration sensors, to change the position of the acceleration sensors from their normal position to a position for a high deceleration to check whether or not all the acceleration sensors give high-deceleration signals and then to move the acceleration sensors back to the normal position to check whether or not the output signals from all the acceleration sensors change from high-deceleration ones to low-deceleration ones and to output the results of such checkups to the warning means.

According to the present invention, the acceleration sensor are tilted to artificially create a state where a high deceleration is detected and a state where a low deceleration is detected to check whether or not the output signals from all the acceleration sensors correspond to the abovementioned state. This makes it possible to accurately determine whether or not the acceleration sensors are working normally.

According to this invention, there are provided test mode changeover means and the acceleration sensor testing means. During the test mode, a high deceleration state and a low deceleration state are created artificially and it can be securely checked whether or not the acceleration sensors are working normally by checking whether the warning lamp is turned ON or OFF.

Other features and objects of the present invention will become apparent from the following description taken with reference to the accompanying drawings, in which:

Fig. 1 is a diagrammatic view of the antilock control system provided with the malfunction detector according to this invention; and

Fig. 2 is a sectional view of an acceleration sensor. Referring to Fig. 1, an electronic control unit 10 carries out various calculations and judgements based on signals from wheel speed sensors S1 - S4 (only S1 is shown) for the vehicle wheels and outputs control signals to a fluid pressure circuit.

The AC voltage signals from the wheel speed sensor S1 are converted into pulses and fed from a wheel speed detecting means 11 (which counts the pulses) to a processing/lock state detecting means 12 as wheel speed signals. Based on the deceleration and estimated vehicle speed calculated in the means 12, it is determined whether or not the deceleration has decreased below a reference value or the slip speed (difference between the estimated vehicle speed and the wheel speed) has increased above a reference point. If such a locking tendency is detected, a pressure reduction command is given to a solenoid actuating circuit 13. In response, the circuit 13 energizes solenoids SOL1 and SOL2. Thus a pressure control valve 21 will be moved to the lefthand side of the figure, shutting off the fluid pressure circuit extending from a master cylinder 23 to a wheel cylinder 24, and a pressure control valve 22 will move upwardly of the figure, opening communication between the wheel cylinder 24 and a reservoir 25. At the same time, a motor M is started by a motor actuating circuit 14 to return the brake fluid in the reservoir 25 into an accumulator 26 and the master cylinder 23 by means of a pump P. Brake pressure will thus drop.

When the wheel speed begins to increase again and the deceleration or the slip speed exceeds a reference value, it is judged that the locking tendency has disappeared. Thus, the lock state detecting means 12 gives a pressure increase command to the solenoid actuating circuit 13, which in response deenergizes the solenoids SOL1 and SOL2 to move the pressure control valves 21 and 22 back to their original positions shown in Fig. 1. Thus, the fluid pressure source and the fluid pressure circuit of the wheel cylinder 24 will communicate with each other and the brake pressure will rise.

When a pressure hold command is given to interrupt the pressure reduction or pressure increase command, the solenoid SOL1 is energized and the solenoid SOL2 is deenergized. Thus, the pressure control valve 21 moves to the lefthand side of the figure, shutting off the fluid pressure circuit, whereas the pressure control valve 22 remains in the position shown in the figure. Thus fluid pressure is sealed in the wheel cylinder 24 and the brake pressure is kept constant. In the figure, numeral 27 designates a bypass valve.

The conditions and timing for interrupting the pressure reduction command with the pressure hold command may be determined in any desired manner. For example, a pressure hold command may be given when the duration of the pressure reduction command reaches a predetermined point or when the wheel deceleration exceeds a predetermined threshold value.

Similarly, the conditions and timing for alternately giving pressure increase commands and pressure hold commands may be determined in various manners. Generally, pressure hold commands are given at predetermined time intervals by use of e.g. a pulse generator.

Judgement on whether or not a locking tendency has appeared or it has disappeared may be made based on the deceleration, slip speed or any other index. In Fig. 1, one fluid pressure circuit for controlling one wheel cylinder 24 is shown coupled to the control device. But it is to be understood that the control device is used to control three channels for the front left wheel, front right wheel and both rear wheels or four channels for the respective four wheels.

The ON OFF signals of acceleration sensors 15 and 15′ are supplied to an acceleration sensor detecting means 16 and then through a test mode changeover means 17 to a level changeover means 18 for antilock processing. The changeover means 18 shifts the control mode to the control for a high-road if either of the acceleration sensors 15 and 15′ indicates a high deceleration (ON signal) and to the control for a low-μ road if both sensors 15 and 15′ show a low deceleration (OFF signal). Or else, the control mode may be switched to the control for a high-μ road if both of the sensors 15 and 15′ indicate a high deceleration and to the control for a road low-μ road if either the sensors 15 and 15′ indicates a low deceleration.

Thus, the processing level changeover means 18 serves to change the processing level of the processing/lock state detecting means 12 depending upon whether the vehicle is travelling on a high-μ road or a low-μ road.

While on a high-μ road, it is common to raise the reference value (threshold value) of the deceleration or slip speed for detecting lock state or to carry out pressure re-increase early after pressure reduction.

On the other hand, while on a low-μ road, the threshold value for detecting lock state is lowered to raise the detecting sensitivity, whereas the threshold value for detecting the tendency to recover from lock state is raised to carry out pressure re-increase slowly after the locking tendency has completely disappeared.

By grounding a manual switch or a test terminal, the test mode changeover means 17 serves to directly supply the signals from the acceleration sensor detecting means 16 to the processing level changeover means 18 during non-test mode and to supply the signals from the acceleration sensor detecting means 16 to an acceleration sensor testing means 19 during test mode.

If, during the test mode, both of the acceleration sensors 15 and 15′ give ON signals when e.g. their housings are tilted from the state where both of the sensors are indicating a low deceleration (giving OFF signals) to artificially create a state where a high deceleration is supposed to be detected, the acceleration sensor testing means 19 will switch a warning lamp WL from ON to OFF or from OFF to ON. If the antilock control system returns from this state to normal position, the tester 19 switches the warning lamp WL in the reverse manner to the above.

Three or more acceleration sensors may be provided. Also, one each warning lamp WL may be provided for each sensor.

## Claims

1. A malfunction detector for acceleration sensors used in an anti lock control system having a processing/lock state detecting means for detecting whether vehicle wheels are showing a tendency to lock or a tendency to recover from locking state and for giving brake pressure control commands such as pressure reduction and pressure increase commands, and a plurality of acceleration sensors for giving detection signals to said processing/lock state detecting means, said malfunction detector comprising a testing means for testing said acceleration sensors, a changeover means for selectively supplying said output signals from said acceleration sensors to said processing/lock state detecting means or to said testing means, and warning means connected to said testing means, said testing means being adapted, upon receipt of said output signals from said acceleration sensors, to change the position of said acceleration sensors from their normal position to a position for a high deceleration to check whether or not all the acceleration sensors give high-deceleration signals and then to move said acceleration sensors back to the normal position to check whether or not the output signals from all the acceleration sensors change from high-deceleration ones to low-deceleration ones and to output the results of such checkups to

said warning means.

## FIG.1

Acceleration sensor detecting means — 16

Test mode changeover means — 17

Level changeover means — 18

Processing/ lock state detecting means — 12

Motor actuating circuit — 14

Acceleration sensor testing means — 19

Wheel speed detecting means — 11

Solenoid actuating circuit — 13

10

+B  +B

15  15'

WL

+B

$SOL_1$  21  27

$SOL_2$  22

23  26

25

M  P

$S_1$  24

## FIG.2

4  1  2  3

M

β

EP 0 420 070 A1

5

European
Patent Office

**EUROPEAN SEARCH
REPORT**

Application Number

**EP 90 11 8220**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 903 069 (FUJI JUKOGYO K.K.)<br>* Column 2, line 43 - column 3, line 13; figures 1-3 * | 1 | G 01 P 21/00 |
| A | DE-A-2 520 987 (H.M. HENDERSON)<br>* Page 4, lines 11-30; figure 1 * | 1 | |
| A | US-A-3 889 232 (L.E. BELL)<br>* Abstract; figure 1 * | 1 | |
| A | US-A-4 051 397 (A.L. TAYLOR)<br>* Column 1, lines 38-46; figures 1,3 * | 1 | |
| A | EP-A-0 299 933 (B.P.T. S.P.A.)<br>* Column 7, lines 27-46; figures 2,5,7,10 * | 1 | |

TECHNICAL FIELDS
SEARCHED (Int. Cl.5)

G 01 P

The present search report has been drawn up for all claims

| Place of search | Date of completion of search | Examiner |
|---|---|---|
| The Hague | 09 January 91 | HANSEN P. |